# EUROPÄISCHE PATENTANMELDUNG

(11) **EP 0 699 387 A1**
(43) Veröffentlichungstag der Anmeldung: **06.03.1996**
(21) Anmeldenummer: 95109770.8
(22) Anmeldetag: 23.06.1995
(51) Int. Cl.: A01K 5/00, A01F 25/20

(54) **Verfahrbare Misch- und Verteilvorrichtung für Viehfutter**

(30) Priorität: 01.09.1994 DE 4431038
(71) Anmelder: von der Heide, Johannes , Dipl.-Ing., D-49479 Ibbenbüren (DE)
(72) Erfinder: von der Heide, Johannes , Dipl.-Ing., D-49479 Ibbenbüren (DE)
(74) Vertreter: Schulze Horn, Stefan, Dipl.-Ing. M.Sc.

(57) **Zusammenfassung**

Die Erfindung betrifft eine verfahrbare Misch- und Verteilvorrichtung für Viehfutter, insbesondere für Silage, Biertreber, Kraftfutter, Mineralfutter und dergleichen mischfähiges Futter, mit einer in Vorrichtungslängsrichtung angeordneten, in Drehung versetzbaren Mischtrommel (2), an deren erster Stirnseite (21) eine abdeckbare Beschickungsöffnung (26) und an deren zweiter Stirnseite eine zentrale, durch eine Austragöffnung (27) in das Trommelinnere ragende drehantreibbare Austragschnecke (4) vorgesehen ist, die in einem nach oben offenen Trog (43) liegt, und wobei am Innenumfang der Mischtrommel (2) nach innen vorstehende Mischflügel (24, 25) angebracht sind.

Die neue verfahrbare Misch- und Verteilvorrichtung ist dadurch gekennzeichnet, daß an der die Beschickungsöffnung (26) aufweisenden ersten Stirnseite (21) der Mischtrommel (2) die Vorrichtung (1) mit einer um eine horizontale Achse (34) mittels eines Kraftantriebes (35) verschwenkbaren Ladeschaufel (3) ausgestattet ist, wobei die Ladeschaufel (3) in ihrer abgesenkten Stellung im wesentlichen parallel zum Untergrund (19) auf oder unmittelbar über diesen liegt und in ihrer angehobenen Stellung eine in das Innere der Mischtrommel (2) führende Gleitbahn bildend vor der Beschickungsöffnung (26) liegt.

## Beschreibung

Die Erfindung betrifft eine verfahrbare Misch- und Verteilvorrichtung für Viehfutter, gemäß dem Oberbegriff des Patentanspruchs 1.

Eine Vorrichtung der oben genannten Art ist aus EP 0 276 645 A1 bekannt. Hinsichtlich der Beschickungsöffnung sind bei dieser bekannten Vorrichtung zwei Ausführungen vorgesehen. Bei einer ersten Ausführung ist in der einen Stirnwand der Mischtrommel eine mit einem Fülltrichter umgebene Beschickungsöffnung vorgesehen, wobei der Fülltrichter starr mit der Mischtrommel verbunden ist und somit bei Drehung der Trommel mitgedreht wird. Für das Beschicken der Mischtrommel mit Viehfutter muß also die Trommel in einer bestimmten Position stillstehen, damit das Futter in den Fülltrichter eingeworfen und von diesem aus durch die Beschickungsöffnung in das Innere der Mischtrommel gelangen kann. Bei einer zweiten Ausführung der bekannten Vorrichtung ist vorgesehen, daß ein relativ kleiner Teilbereich des Mantels der Mischtrommel als in Längsrichtung der Mischtrommel verschiebbarer Deckel ausgebildet ist, der eine im Trommelmantel ausgesparte Beschickungsöffnung wahlweise freigibt oder verschließt. Auch bei dieser Ausführung muß die Mischtrommel für das Beschicken mit Viehfutter in einer bestimmten Stellung stillstehen, wobei hier der zusätzliche Nachteil auftritt, daß die Beschickungsöffnung sehr hoch liegt. In der Praxis liegt die Oberkante der Mischtrommel in annähernd drei Meter Höhe, so daß für das Beschicken der Mischtrommel eine besondere Ladevorrichtung, beispielsweise ein Schlepper mit Frontlader, benötigt wird, mit dem die erforderliche Ladehöhe erreicht wird. Bei beiden Ausführungen der bekannten Vorrichtung ist also das Beschicken der Mischtrommel mit Viehfutter relativ umständlich und aufwendig und kann nur mit Hilfe von zusätzlichen Ladevorrichtungen bewerkstelligt werden. Außerdem ist als nachteilig anzusehen, daß während des Beschickens der Mischtrommel mit Viehfutter diese stillstehen muß, so daß die Beladungszeit noch nicht für einen Mischvorgang, bei dem die Trommel in Drehung versetzt wird, genutzt werden kann.

Es stellt sich daher die Aufgabe, eine verfahrbare Misch- und Verteilvorrichtung der eingangs genannten Art zu schaffen, die die aufgeführten Nachteile vermeidet und bei der insbesondere das Beschicken der Mischtrommel mit Viehfutter wesentlich vereinfacht ist und bei der auch während des Beschickens der Mischtrommel mit Viehfutter schon der Mischvorgang beginnen kann.

Die Lösung der gestellten Aufgabe gelingt erfindungsgemäß durch eine Misch- und Verteilvorrichtung der eingangs genannten Art, welche dadurch gekennzeichnet ist, daß an der die Beschickungsöffnung aufweisenden ersten Stirnseite der Mischtrommel die Vorrichtung mit einer um eine horizontale Achse mittels eines Kraftantriebes verschwenkbaren Ladeschaufel ausgestattet ist, wobei die Ladeschaufel in ihrer abgesenkten Stellung im wesentlichen parallel zum Untergrund auf oder unmittelbar über diesen liegt und in ihrer angehobenen Stellung eine in das Innere der Mischtrommel führende Gleitbahn bildend vor der Beschickungsöffnung liegt.

Die erfindungsgemäße Misch- und Verteilvorrichtung bietet den Vorteil, daß diese selbst in der Lage ist, die Beschickung der Mischtrommel mit Viehfutter vorzunehmen. Dabei spielt es keine Rolle, ob das Futter als loses Schüttgut, als aus einem Fahrsilo ausgeschnittener Silageblock oder als Silage-Rundballen vorliegt. Außerdem deckt die Ladeschaufel in ihrer angehobenen Stellung die Beschickungsöffnung der Mischtrommel ab, so daß ein Herausfallen von Viehfutter aus der Mischtrommel während des Mischvorganges nicht möglich ist. Zweckmäßig ist die Ladeschaufel dabei so an der Vorrichtung angelenkt, daß die von der Ladeschaufel gebildete Gleitbahn in der angehobenen Stellung der Ladeschaufel bis in das Innere der Trommel reicht, um eine sichere Zuführung des Futters unter Schwerkraftwirkung von der Ladeschaufel in das Innere der Mischtrommel zu gewährleisten. Außerdem kann vorteilhaft bei der erfindungsgemäßen Misch- und Verteilvorrichtung der Mischvorgang schon während des Beschickens beginnen, da sich die Mischtrommel unanhängig von der Ladeschaufel um ihre Längsachse drehen kann.

Um eine möglichst große Beschickungsöffnung zur Verfügung zu stellen und um gleichzeitig die Form der Ladeschaufel relativ einfach halten zu können, wird vorgeschlagen, daß an der ersten Stirnseite der Mischtrommel diese offen und ohne eine Trommelstirnwand ausgebildet ist und daß die Vorrichtung eine feste, die Bereiche der offenen Trommelstirnseite seitlich links und rechts sowie unterhalb der angehobenen Ladeschaufel futterdicht überdeckende Abdeckung aufweist. Die Ladeschaufel kann dabei eine im wesentlichen rechteckige Grundfläche aufweisen, was deren Herstellung besonders einfach macht.

Zur Erleichterung der Aufnahme von Futter durch die Ladeschaufel vom Untergrund ist vorgesehen, daß die Ladeschaufel mit einem abgeknickten Boden und mit zwei senkrecht zum Boden verlaufenden Seitenwänden ausgebildet ist. Dabei ist die Anordnung des abgeknickten Bodens zweckmäßig so, daß in der abgesenkten Stellung der Ladeschaufel der an das freie Ende der Ladeschaufel angrenzende Teile des Ladeschaufelbodens parallel zum Untergrund verläuft, während der abgeknickte, weitere Teil des Ladeschaufelbodens eine Steigung zum Inneren der Mischtrommel hin bildet. Entsprechend verläuft dann in der angehobenen Stellung der Ladeschaufel der erste Teil des Ladeschaufelbodens im wesentlichen vertikal und geht dann in den zweiten, schräg abwärts in das Innere der Mischtrommel führenden zweiten Teil des Ladeschaufelbodens über.

Bei der einleitend erläuterten bekannten Vorrichtung erstreckt sich die Austragschnecke mit ihrem Trog über mehr als die Hälfte der Länge der Mischtrommel, was einen nachteilig hohen konstruktiven Aufwand erfordert. Demgegenüber ist bei der erfindungsgemäßen Misch- und Verteilvorrichtung vorgesehen, daß die Austragschnecke eine Länge aufweist, die höchstens 1/4, vorzugsweise nur 1/5 der Länge der Mischtrommel entspricht. Dies ermöglicht die Verwendung einer sehr kurzen Schnecke, was die Materialkosten und den konstruktiven Aufwand für die Lagerung vermindert. Aufgrund der bei der erfindungsgemäßen Misch- und Verteilvorrichtung in der Mischtrommel erreichten intensiven Mischung des Viehfutters wird die Austragschnecke lediglich für das Austragen des Viehfutters aus der Mischtrommel nach außen benötigt; am Mischvorgang selbst ist sie nicht beteiligt.

Hinsichtlich der Austragschnecke ist weiter vorgesehen, daß diese in Umfangswinkelrichtung gesehen eine Schneckenlänge von 540 bis 1080°, d.h. 1 1/2 bis 3 Schneckenumdrehungen aufweist. Mit dieser Gestaltung der Austragschnecke wird ein zügiges Ausbringen des gemischten Futters sichergestellt.

Weiterhin ist vorgesehen, daß der Trog, in dem die Austragschnecke liegt, im Inneren der Mischtrommel doppelwandig ausgeführt ist, wobei eine innere Trogwand im Querschnitt gesehen U-förmig verläuft und eine äußere Trogwand im Querschnitt gesehen kreisbogenabschnittförmig um die innere Trogwand herum verläuft und wobei die beiden Wände an den freien U-Schenkelenden jeweils unter Bildung eines spitzen Winkels zu zwei Trogoberkanten zusammentreffen. Hierdurch wird einerseits der Trog besonders stabil und andererseits werden Toträume, in denen sich Restmengen von Futter anlagern können, innerhalb der Mischtrommel vermieden.

Eine weitere Ausgestaltung der Misch- und Verteilvorrichtung gemäß Erfindung besteht darin, daß die Austragschnecke allein an ihrem trommeläußeren Ende gelagert ist, wobei die Lagerung so elastisch ist, daß die Schnecke an ihrem trommelinneren Ende relativ zu dem Trog in Vertikalrichtung elastisch nach oben hin auslenkbar ist. Diese nur einseitige Lagerung der Schnecke führt zu einer einfachen Konstruktion, wobei gleichzeitig sichergestellt ist, daß Schäden an der Schnecke und ihrem Antrieb durch zwischen Trog und Schnecke geratendes Futter vermieden werden, da die Schnecke bei derartigen Belastungen elastisch ausweichen kann. Sobald derartige Belastungen entfallen, federt die Schnecke wieder in ihre Normallage zurück.

Zur Erzielung einer intensiven Lockerung und Durchmischung des Viehfutters und zur gleichzeitigen Vermeidung von scharfen Ecken, an denen insbesondere langfaseriges Futter hängen bleiben kann, ist vorgesehen, daß die Mischflügel in dem nicht die Austragschnecke umgebenden Trommelbereich unter einem zur Umfangsrichtung der Mischtrommel schräg verlaufenden Winkel am Innenumfang der Mischtrommel angeordnet und mit einem gerundeten Stirnkantenverlauf ausgeführt sind. Gleichzeitig sorgt die schräge Anordnung der Mischflügel für eine stetige Förderung des Futtermittels innerhalb der Mischtrommel zu deren Austragende hin, wenn die Mischtrommel mit entsprechender Drehrichtung gedreht wird.

Um trotz der verhältnismäßig geringen Länge der Schnecke ein wirksames und vollständiges Austragen des gemischten Viehfutters aus der Mischtrommel zu gewährleisten, ist vorgesehen, daß die Mischflügel in dem die Austragschnecke und deren Trog umgebenden Trommelbereich im wesentlichen in Längsrichtung der Mischtrommel verlaufend an deren Innenumfang angeordnet sind. Von diesen in Längsrichtung der Mischtrommel verlaufenden Mischflügeln um die Schnecke herum wird das gemischte Futter schaufelradartig angehoben und fällt dann von oben her auf die Schnecke und in den Trog, von wo aus das Futter bei in Austragrichtung sich drehender Schnecke abgefördert wird. Solange ein Austrag nicht erfolgen soll, kann einfach die Schnecke entweder stillgesetzt oder in Gegenrichtung gedreht werden, so daß auf die Schnecke fallendes Futter zunächst wieder in das Innere der Mischtrommel zurückgefördert wird.

Um den die Schnecke umgebenden, oben offenen Trog und insbesondere dessen Oberkanten stets sauber und frei von anhängendem oder anbackendem Futter zu halten, wird vorgeschlagen, daß die Mischflügel jeweils an ihrer zur Austragschnecke weisenden Seite elastisch-flexible Flügelendstücke aufweisen, die bei Drehung der Mischtrommel in gleitendem Kontakt über den Außenumfang des Troges laufen.

Um einen Abwurf des gemischten und mittels der Schnecke aus der Mischtommel ausgetragenem Futters seitlich in einen Futtertrog oder Stallgang zu ermöglichen, ist vorgesehen, daß unter dem trommeläußeren Ende der Austragschnecke ein Querförderband mit umschaltbarer Förderrichtung angeordnet ist. Zusätzlich kann vorgesehen sein, daß das Querförderband mit unterschiedlichen Fördergeschwindigkeiten betrieben werden kann, um die Abwurfweite des ausgetragenen Futters verändern zu können.

Um die Mischtrommel in der gewünschten Weise um ihre Längsachse drehen zu können und dabei die Laste der Mischtrommel selbst und des darin befindlichen Futters aufzunehmen, ist vorgesehen, daß die Mischtrommel an oder nahe mindestens einem stirnende auf mindestens einem Paar von Tragrollen gelagert ist, die am Trommelaußenumfang anliegen. Alternativ oder zusätzlich kann die Mischtrommel an mindestens einem Stirnende in einem Drehkranz gelagert sein.

Eine weitere vorteilhafte Ausgestaltung der Misch- und Verteilvorrichtung gemäß Erfindung sieht vor, daß die Tragrollen und/oder der Drehkranz sich jeweils über eine Wägung des eingeladenen Viehfutters ermöglichende Lastmeßaufnehmer auf einem Vorrichtungsrahmen abstützen. Hierdurch wird eine exakte und reproduzierbare Herstellung von Futtermischungen aus unterschiedlichen Futtersorten und Futterzusätzen ermöglicht, ohne daß eine externe Waage benötigt wird. Dies führt zu einer weiteren Rationalisierung der Futteraufbereitung.

Hinsichtlich des Drehantriebes der Mischtrommel schlägt die Erfindung in einer ersten Ausführung vor, daß an der zweiten Stirnseite der Mischtrommel um die Austragöffnung herum ein Zahnkranz verdrehfest angebracht ist und daß ein Antriebsmotor mit einem Ritzel unmittelbar oder über eine Kette mit dem Zahnkranz verbunden ist. Eine diesbezügliche alternative Ausführung sieht vor, daß an der zweiten Stirnseite der Mischtrommel um die Austragöffnung herum eine Kette verdrehfest angebracht ist und daß ein Antriebsmotor mit einem Ritzel unmittelbar in die verdrehfeste Kette eingreift.

Beide zuvor dargelegten Ausführungen des Drehantriebes ermöglichen die Verwendung eines Antriebsmotors relativ geringer Leistung, da aufgrund des vergleichsweise großen Umfanges der Mischtrommel der Zahnkranz bzw. die verdrehfest angebrachte Kette einen großen Durchmesser aufweisen können, so daß ohne weiteres Getriebe eine ausreichende Untersetzung erreicht wird.

Um noch während des Austragens und Verteilens von Viehfutter dessen Zusammensetzung gezielt verändern zu können, wird vorgeschlagen, daß vor der zweiten Stirnseite der Mischtrommel und/oder seitlich oben neben der Mischtrommel mindestens ein Zusatzfutterbehälter angeordnet ist, aus welchem/welchen Zusatzfutter auf den trommeläußeren Teil der Austragschnecke und/oder auf das Querförderband austragbar ist. In diese Zusatzfutterbehälter können schüttfähige Zusatzfutter vorab eingefüllt werden, die dann nach Bedarf durch Freigabe von Dosierschleusen oder Einschalten von Förderschnecken dem aus der Mischtrommel ausgetragenen Viehfutter beigegeben werden.

Zur Realisierung der Verfahrbarkeit der Misch- und Verteilvorrichtung gemäß Erfindung ist in einer ersten Ausgestaltung vorgesehen, daß die Vorrichtung als Anhänger ausgeführt ist, der mit einem Schleppfahrzeug, insbesondere einem landwirdschaftlichen Schlepper, kuppelbar und von diesem aus über eine Zapfwelle und/oder dessen Hydraulikanlage antreibbar und betätigbar ist. Diese Ausführung zeichnet sich insbesondere durch relativ geringe Herstellungskosten aus, wobei für den Betrieb der Vorrichtung ein auf jedem landwirtschaftlichen Betrieb vorhandener Schlepper eingesetzt werden kann.

Eine diesbezügliche alternative Ausführung der Vorrichtung sieht vor, daß diese als selbstfahrendes Fahrzeug mit Eigenantrieb, Lenkung und Führerstand ausgebildet ist. Diese Ausführung der Vorrichtung erfordert zwar einen höheren Aufwand und führt zu höheren Herstellungskosten, jedoch wird hier der Vorteil erreicht, daß die Vorrichtung unabhängig von einem weiteren Arbeitsfahrzeug für sich allein betriebsfähig ist.

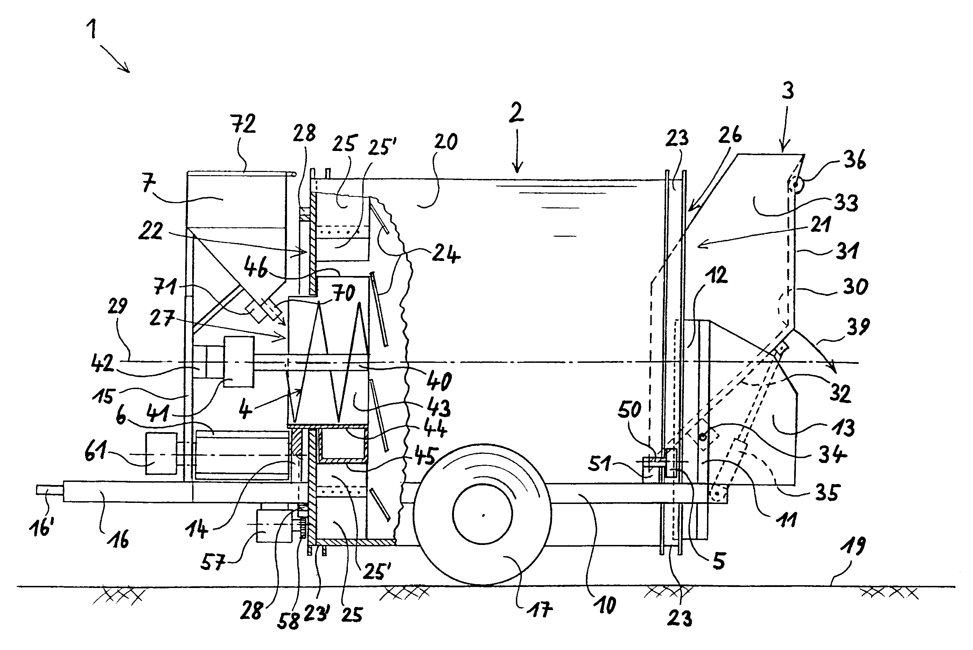

Ein Ausführungsbeispiel der Erfindung wird im folgenden anhand einer Zeichnung erläutert. Die einzige Figur der Zeichnung zeigt eine Misch- und Verteilvorrichtung in Seitenansicht, teils in aufgeschnittener Darstellung.

Wie die Zeichnung zeigt, besteht das hier dargestellte Ausführungsbeispiel der Misch- und Verteilvorrichtung 1 im wesentlichen aus einer liegend angeordneten zylindrischen Mischtrommel 2, die um ihre Längsmittelachse 29 drehbar auf einem Rahmen 10 gelagert ist. Der Rahmen 10 bildet zusammen mit zwei Rädern 17, von denen hier das vordere sichtbar ist, ein Anhänger-Fahrgestell. An der vorderen, d.h. in der Zeichnung linken Seite der Vorrichtung 1 geht der Rahmen 10 in eine Zugdeichsel 16 mit einer an deren freiem Ende angeordneten Kupplungsöse 16' über.

Zur Ermöglichung der Drehung der Mischtrommel 2 um die in Längsrichtung der Vorrichtung 1 verlaufende Achse 29 sind außen am Umfang 20 der Mischtrommel 2 nahe deren Stirnseiten 21 und 22 zwei Rollenbahnen 23, 23' ausgebildet, in welche jeweils ein Paar von zwei Tragrollen 5 eingreift. Von diesen Tragrollen 5 ist in der zeichnerischen Darstellung der Vorrichtung 1 lediglich eine der beiden hinteren, d.h. in der Zeichnung rechten Tragrollen 5 erkennbar. Die Tragrolle 5 ist um eine parallel zur Achse 29 verlaufende Rollenachse 50 drehbar gelagert und stützt sich über einen Lastmeßaufnehmer 51 auf den Rahmen 10 ab. Mittels dieses Lastmeßaufnehmers 51 sowie drei weiterer, jeweils den anderen Rollen 5 zugeordneter Lastaufnehmer kann eine elektronische Wägeeinheit mit Meßdaten zur Berechnung des Gewichts des in die Mischtrommel 2 eingeladenen Viehfutters gespeist werden. Solche Wägeeinrichtungen sind an sich bekannt und brauchen deshalb nicht näher beschrieben zu werden.

Um die Mischtrommel 2 in Drehung um ihre Achse 29 versetzen zu können, ist an der Vorrichtung 1 ein Motor 57 vorgesehen, der vor der vorderen Stirnseite 22 der Mischtrommel 2 unten am Rahmen 10 angebracht ist. Der Motor 57 besitzt ein Ritzel 58, welches mit einem Zahnkranz 28 kämmt, der auf der vorderen Stirnseite 22 der Mischtrommel 2 verdrehfest angebracht ist.

Für das Befüllen mit Viehfutter, das in der Mischtrommel 2 aufbereitet werden soll, besitzt diese Mischtrommel 2 an ihrer hinteren, d.h. in der Zeichnung rechten Stirnseite 21 eine Beschickungsöffnung 26, die dadurch gebildet ist, daß die Mischtrommel 2 an dieser Seite ohne eine Stirnwand, also offen ausgebildet ist. Ein Teilbereich der Stirnseite 21 wird von einer Abdeckung 12 verdeckt, die in die Mischtrommel 2 geringfügig hineinragt und an dieser unter Zwischenlage hier nicht dargestellter Gleitdichtungen anliegt. Die Abdeckung 12 besitzt in ihrem mittleren Teil eine in ihrer Grundform rechteckige Ausnehmung, deren linke, rechte und untere Kante gradlinig verlaufen. Hierdurch wird die Beschickungsöffnung 26 so gebildet, daß sie unten sowie links und rechts gradlinig begrenzt ist, während sie oben durch den Innenumfang der Mischtrommel 2 kreisbogenförmig verläuft.

Die Abdeckung 12 wird von einem am hinteren Ende des Rahmens 10 nach oben hin aufragenden hinteren Rahmenteil 11 gehalten. Weiterhin trägt dieser hintere Rahmenteil 11 zwei parallel zueinander angeordnete, mit der linken und rechten Kante der Beschickungsöffnung 26 fluchtende und frei nach hinten weisende Leitwände 13, die durch Blechplatten gebildet sind.

Zwischen den beiden Leitwänden 13, von denen hier lediglich die dem Betrachter zugewandte sichtbar ist, ist eine Ladeschaufel 3 angeordnet, die um eine horizontal etwas oberhalb des tiefsten Teils der Mischtrommel 2 vorderen Stirnseite 21 verlaufende Schwenkachse 34 verschwenkbar ist. Für die Verschwenkung der Ladeschaufel 3 wird hier ein durch eine hydraulische Kolben-Zylinder-Einheit 35 gebildeter Kraftantrieb verwendet.

Die Ladeschaufel 3 besitzt einen Boden 30 und zwei sich von diesem senkrecht nach oben bzw. vorn erstreckende Seitenwände 33, an denen hier wieder nur die vordere, d.h. dem Betrachter zugewandte Seitenwand 33 sichtbar ist. In der in der in der Zeichnung gezeigten angehobenen Stellung der Ladeklappe 3 liegt diese vor der Beschickungsöffnung 26 der Mischtrommel und deckt diese weitestgehend ab. Der Boden 30 ist unterteilt in zwei Bodenbereiche 31 und 32, die gegeneinander abgewinkelt angeordnet sind. Der dem freien, hier oberen Ende der Ladeschaufel 3 benachbarte Bodenteil 31 verläuft in der angehobenen Stellung der Ladeschaufel 3 im wesentlichen vertikal; der zweite Bodenteil 32 bildet eine durch die Beschickungsöffnung 26 in das Innere der Mischtrommel 2 verlaufende schräge Gleitbahn.

Durch Einfahren der Kolben-Zylinder-Einheit 35 kann die Ladeschaufel 3 aus der gezeigten Stellung in Richtung des Bewegungspfeiles 39 abgesenkt werden, bis sie mit ihrem Bodenteil 31 parallel zum Untergrund 19 verläuft, wobei sich die Ladeschaufel 3 dann mit einer unter dem Bodenteil 31 angeordneten Stützrolle 36 abstützt. In dieser abgesenkten Stellung der Ladeschaufel 3 kann durch Rückwärtsfahren der Vorrichtung 1 Futter in die Ladeschaufel 3 aufgenommen werden, beispielsweise aus einer losen Schüttung oder aus einem Vorrat von ausgeschnittenen Silageblöcken oder Silageballen. Durch Ausfahren der Kolben-Zylinder-Einheit 35 kann dann die Ladeschaufel 3 zusammen mit dem darauf befindlichen Futter nach oben hin in die in der Zeichnung gezeigte Stellung verschwenkt werden, wodurch unter die Wirkung der Schwerkraft das Futter aus der Ladeschaufel 3 in das Innere der Mischtrommel 2 rutscht.

Bei diesem Ladevorgang kann die Mischtrommel 2 schon mittels des Motors 57 in Drehung um ihre Achse 29 versetzt werden, so daß schon während des Beladens der Misch- und Lockerungsvorgang beginnen kann. Zur Unterstützung des Mischvorganges sind am Innenumfang der Mischtrommel 2 mehrere Mischflügel 24 angebracht, die durch flache Blechplatten gebildet sind, welche an den Innenumfang der Mischtrommel 2 angeschweißt oder angeschraubt sind. Wie aus der Zeichnung ersichtlich ist, sind diese Mischflügel 24 unter einem schräg zur Umfangsrichtung verlaufenden Winkel angeordnet, so daß sich bei Drehung der Mischtrommel 2 um die Achse 29 außer einer Mischung und Lockerung des in der Trommel 2 befindlichen Futters auch eine stetige Förderung in Längsrichtung der Trommel 2 ergibt. Die Richtung der Förderung hängt dabei von der Drehrichtung der Trommel 2 ab und wird im Normalfall so gewählt, daß sich eine Förderung von hinten nach vorne, d.h. von der Beschickungsöffnung 26 in Richtung zur vorderen Stirnseite 22 ergibt. Die Mischflügel 24 sind über annähernd die gesamte Innenumfangsfläche der Mischtrommel 2 verteilt angeordnet, so daß in allen Bereichen der Mischtrommel 2 eine intensive Mischung und Lockerung sowie Förderung des Futters gewährleistet ist.

Weiterhin umfaßt die dargestellte Vorrichtung 1 eine Austragschnecke 4, die konzentrisch zur Achse 29 der Mischtrommel 2 in deren vorderem Bereich zentral in der vorderen Stirnseite 22 angeordnet ist. Die Länge der Schnecke 4 in Richtung der Achse 29 beträgt dabei nur einen geringen Bruchteil der Gesamtlänge der Mischtrommel 2.

Um die Austragschnecke 4 herum ist ein Trog 43 angeordnet, der im Querschnitt gesehen U-förmig verläuft und nach oben hin offen ist. Dabei durchsetzt auch der Trog 43 die vordere Stirnseite 22 der Mischtrommel 2. An seinem vorderen Ende, das aus der Mischtrommel 2 vorragt, ist der Trog 43 mittels einer Trogstütze 14 mit dem Rahmen 10 verbunden, wobei zwischen dem Trog 43 und der vorderen Stirnseite der Mischtrommel 22 ein ausreichender Bewegungsspalt freigehalten ist.

In seinem im Inneren der Mischtrommel 2 liegenden Teil ist der Trog 43 doppelwandig mit einer inneren Wand 44 und einer äußeren Wand 45 ausgeführt. Die der Schnecke 4 benachbarte innere Wand 44 verläuft im Querschnitt gesehen U-förmig und weist mit ihren U-Schenkeln nach oben. Die äußere Wand 45 umgibt die innere Wand 44 und verläuft kreisbogenabschnittförmig, wobei die beiden Wände 44, 45 oben zu zwei Oberkanten 46 des Troges 43 zusammenlaufen.

Um den Trog 43 und die Schnecke 4 herum sind im Inneren der Mischtrommel 2 an deren Innenumfang weitere Mischflügel 25 angebracht, die aber im Unterschied zu den Mischflügeln 24 in Langsrichtung der Mischtrommel 2 ausgerichtet sind. An ihrer zur Austragschnecke 4 und zum Trog 43 weisenden Seite sind diese Mischfügel 25 mit elastisch-flexiblen Flügelendstücken 25' versehen, die z.B. durch Kunststoff- oder Gummiplatten gebildet sind. Die freien Stirnkanten dieser Flügelendstücke 25' laufen bei Drehung der Mischtrommel 2 in Gleitkontakt über die Außenumfangsfläche der äußeren Trogwand 45 und reinigen diese von anhaftenden Futterbestandteilen. Außerdem sorgen die Mischflügel 25 mit den Flügelendstücken 25' für ein Anheben und Abwerfen von Futter von oben her in den Trog 43, von wo aus das Futter bei in Austragrichtung drehender Schnecke 4 durch eine durch die vordere Trogstirnseite gebildete Austragöffnung 27 ausgebracht wird. Soll nur eine Futtermischung ohne Futteraustrag erfolgen, genügt es, die Austragschnecke 4 stillzusetzen oder entgegen ihrer Austragrichtung zu drehen, wodurch dann auf die Schnecke 4 gefördertes Futter wieder in den Innenraum der Mischtrommel 2 zurückbefördert wird.

Der Antrieb der Austragschnecke 4 erfolgt über einen vor der vorderen Trommelstirnseite 22 angeordneten Motor 41, der mit einer Schneckenwelle 40 verbunden ist. Der Motor 41 ist über eine elastische Lagerung oder Aufhängung 42 mit einem sich vom vorderen Teil des Rahmens 10 nach oben hin erstreckenden vorderen Rahmenteil 15 verbunden. Aufgrund dieser elastischen Lagerung kann die Schnecke 4 an ihrem im Inneren der Mischtrommel 2 liegenden Ende bei Bedarf elastisch nach oben hin ausweichen, wodurch Überlastungen und Schäden der Austragschnecke 4 durch zwischen Schnecke 4 und Trog 43 gelangende Futterteile vermieden werden.

Das durch die Austragöffnung 27 mittels der Austragschnecke 4 ausgetragene gemischte Futter gelangt auf ein Querförderband 6, das mittels eines in seiner Drehrichtung umschaltbaren Motors 61 das gemischte Futterwahl wahlweise nach links oder rechts abwirft.

Oberhalb des Querförderbandes 6 und des Motors 41 für die Austragschnecke 4 ist bei dem dargestellten Ausführungsbeispiel der Vorrichtung 1 schließlich noch ein Zusatzfutterbehälter 7 angeordnet, der insgesamt trichterförmig ausgebildet ist und oberseitig einen aufklappbaren Deckel 72 hat. Am unteren Ende dieses Zusatzfutterbehälters 7 ist ein kurzer rohrförmiger Auslaufstutzen 70 angebracht, der mittels eines vorzugsweise fernbetätigbaren Schiebers 71 freigebbar oder absperrbar ist. Dadurch kann schüttfähiges Zusatzfutter, z.B. Mineralstoffe oder schüttfähiges Kraftfutter, aus dem Zusatzfutterbehälter 7 auf den vorderen Endbereich der Austragschnecke 4 gestreut werden, wodurch auch dieses Zusatzfutter noch intensiv mit dem aus der Mischtrommel 2 ausgetragenen weiteren Futter vermischt und dann gemeinsam mit diesem durch das Querförderband 6 abgeworfen werden kann.

Die an der Vorrichtung 1 verwendeten Motoren sind vorzugsweise Hydromotoren, die entweder unmittelbar von einem hier nicht dargestellten Schleppfahrzeug aus von dessen Hydraulikanlage versorgt werden oder mittels einer an der Vorrichtung vorgesehenen, über eine Schleppfahrzeug-Zapfwelle antreibbaren Hydraulikpumpe betreibbar sind.

## Patentansprüche

1. Verfahrbare Misch- und Verteilvorrichtung für Viehfutter, insbesondere für Silage, Biertreber, Kraftfutter, Mineralfutter und dergleichen mischfähiges Futter, mit einer in Vorrichtungslängsrichtung angeordneten, in Drehung versetzbaren Mischtrommel (2), an deren erster Stirnseite (21) eine abdeckbare Beschickungsöffnung (26) und an deren zweiter Stirnseite eine zentrale, durch eine Austragöffnung (27) in das Trommelinnere ragende drehantreibbare Austragschnecke (4) vorgesehen ist, die in einem nach oben offenen Trog (43) liegt, und wobei am Innenumfang der Mischtrommel (2) nach innen vorstehende Mischflügel (24, 25) angebracht sind,
**dadurch gekennzeichnet**,
daß an der die Beschickungsöffnung (26) aufweisenden ersten Stirnseite (21) der Mischtrommel (2) die Vorrichtung (1) mit einer um eine horizontale Achse (34) mittels eines Kraftantriebes (35) verschwenkbaren Ladeschaufel (3) ausgestattet ist, wobei die Ladeschaufel (3) in ihrer abgesenkten Stellung im wesentlichen parallel zum Untergrund (19) auf oder unmittelbar über diesen liegt und in ihrer angehobenen Stellung eine in das Innere der Mischtrommel (2) führende Gleitbahn bildend vor der Beschickungsöffnung (26) liegt.

2. Misch- und Verteilvorrichtung nach Anspruch 1, dadurch gekennzeichnet, daß an der ersten Stirnseite (21) der Mischtrommel (2) diese offen und ohne eine Trommelstirnwand ausgebildet ist und daß die Vorrichtung (1) eine feste, die Bereiche der offenen Trommelstirnseite (21) seitlich links und rechts sowie unterhalb der angehobenen Ladeschaufel (3) futterdicht überdeckende Abdeckung (12) aufweist.

3. Misch- und Verteilvorrichtung nach Anspruch 1 oder 2, dadurch gekennzeichnet, daß die Ladeschaufel (3) mit einem abgeknickten Boden (30) und mit zwei senkrecht zum Boden (30) verlaufenden Seitenwänden (33) ausgebildet ist.

4. Misch- und Verteilvorrichtung nach einem der vorangehenden Ansprüche, dadurch gekennzeichnet, daß die Austragschnecke (4) ein Länge aufweist, die höchstens 1/4, vorzugsweise 1/5 der Länge der Mischtrommel (2) entspricht.

5. Misch- und Verteilvorrichtung nach einem der vorangehenden Ansprüche, dadurch gekennzeichnet, daß die Austragschnecke (4) in Umfangswinkelrichtung gesehen eine Schneckenlänge von 540 bis 1080°, d.h. 1 1/2 bis 3 Schneckenumdrehungen aufweist.

6. Misch- und Verteilvorrichtung nach einem der vorangehenden Ansprüche, dadurch gekennzeichnet, daß der Trog (43), in dem die Austragschnecke (4) liegt, im Inneren der Mischtrommel (2) doppelwandig ausgeführt ist, wobei eine innere Trogwand (44) im Querschnitt gesehen U-förmig verläuft und eine äußere Trogwand (45) im Querschnitt gesehen kreisbogenabschnittförmig um die innere Trogwand (44) herum verläuft und wobei die beiden Wände (44, 45) an den freien U-Schenkelenden jeweils unter Bildung eines spitzen Winkels zu zwei Trogoberkanten (46) zusammentreffen.

7. Misch- und Verteilvorrichtung nach einem der vorangehenden Ansprüche, dadurch gekennzeichnet, daß die Austragschnecke (4) allein an ihrem trommeläußeren Ende gelagert ist, wobei die Lagerung (42) so elastisch ist, daß die Schnecke (4) an ihrem trommelinneren Ende relativ zu dem Trog (43) in Vertikalrichtung elastisch nach oben hin auslenkbar ist.

8. Misch- und Verteilvorrichtung nach einem der vorangehenden Ansprüche, dadurch gekennzeichnet, daß die Mischflügel (24) in dem nicht die Austragschnecke (4) umgebenden Trommelbereich unter einem zur Umfangsrichtung der Mischtrommel (2) schräg verlaufenden Winkel am Innenumfang der Mischtrommel (2) angeordnet und mit einem gerundeten Stirnkantenverlauf ausgeführt sind.

9. Misch- und Verteilvorrichtung nach einem der vorangehenden Ansprüche, dadurch gekennzeichnet, daß die Mischflügel (25) in dem die Austragschnecke (4) und deren Trog (43) umgebenden Trommelbereich im wesentlichen in Längsrichtung der Mischtrommel (2) verlaufend an deren Innenumfang angeordnet sind.

10. Misch- und Verteilvorrichtung nach Anspruch 9, dadurch gekennzeichnet, daß die Mischflügel (25) jeweils an ihrer zur Austragschnecke (4) weisenden Seite elastischflexible Flügelendstücke (25') aufweisen, die bei Drehung der Mischtrommel (2) in gleitendem Kontakt über den Außenumfang des Troges (43) laufen.

11. Misch- und Verteilvorrichtung nach einem der vorangehenden Ansprüche, dadurch gekennzeichnet, daß unter dem trommeläußeren Ende der Austragschnecke (4) ein Querförderband (6) mit umschaltbarer Förderrichtung angeordnet ist.

12. Misch- und Verteilvorrichtung nach einem der vorangehenden Ansprüche, dadurch gekennzeichnet, daß die Mischtrommel (2) an oder nahe mindestens einem Stirnende (21, 22) auf mindestens einem Paar von Tragrollen (5) gelagert ist, die am Trommelaußenumfang (20) anliegen.

13. Misch- und Verteilvorrichtung nach einem der vorangehenden Ansprüche, dadurch gekennzeichnet, daß die Mischtrommel (2) an mindestens einem Stirnende (21, 22) in einem Drehkranz gelagert ist.

14. Misch- und Verteilvorrichtung nach Anspruch 12 oder 13, dadurch gekennzeichnet, daß die Tragrollen (5) und/oder der Drehkranz sich jeweils über eine Wägung des eingeladenen Viehfutters ermöglichende Lastmeßaufnehmer (51) auf einem Vorrichtungsrahmen (10) abstützen.

15. Misch- und Verteilvorrichtung nach einem der Ansprüche 1 bis 14, dadurch gekennzeichnet, daß an der zweiten Stirnseite (22) der Mischtrommel (2) um die Austragöffnung (27) herum ein Zahnkranz (28) verdrehfest angebracht ist und daß ein Antriebsmotor (57) mit einem Ritzel (58) unmittelbar oder über eine Kette mit dem Zahnkranz (28) verbunden ist.

16. Misch- und Verteilvorrichtung nach einem der Ansprüche 1 bis 14, dadurch gekennzeichnet, daß an der zweiten Stirnseite (22) der Mischtrommel (2) um die Austragöffnung (27) herum eine Kette verdrehfest angebracht ist und daß ein Antriebsmotor (57) mit einem Ritzel (58) unmittelbar in die verdrehfeste Kette eingreift.

17. Misch- und Verteilvorrichtung nach einem der vorangehenden Ansprüche, dadurch gekennzeichnet, daß vor der zweiten Stirnseite (22) der Mischtrommel (2) und/oder seitlich oben neben der Mischtrommel (2) mindestens ein Zusatzfutterbehälter (7) angeordnet ist, aus welchem/welchen Zusatzfutter auf den trommeläußeren Teil der Austragschnecke (4) und/oder auf das Querförderband (6) austragbar ist.

18. Misch- und Verteilvorrichtung nach einem der Ansprüche 1 bis 17, dadurch gekennzeichnet, daß die Vorrichtung (1) als Anhänger ausgeführt ist, der mit einem Schleppfahrzeug, insbesondere einem landwirtschaftlichen Schlepper, kuppelbar und von diesem aus über eine Zapfwelle und/oder dessen Hydraulikanlage antreibbar und betätigbar ist.

19. Misch- und Verteilvorrichtung nach einem der Ansprüche 1 bis 17, dadurch gekennzeichnet, daß die Vorrichtung (1) als selbstfahrendes Fahrzeug mit Eigenantrieb, Lenkung und Führerstand ausgebildet ist.
